# EUROPÄISCHE PATENTANMELDUNG

(11) **EP 3 896 579 A1**
(43) Veröffentlichungstag der Anmeldung: **20.10.2021**
(21) Anmeldenummer: 20170082.0
(22) Anmeldetag: 17.04.2020
(51) Int. Cl.: G06F 16/23

(54) **VERFAHREN ZUR INTEGRATION UND KOORDINATION VON MESS- UND/ODER STEUERSYSTEMEN**

(71) Anmelder: Allianz Deutschland AG, 85774 Unterföhring (DE)
(72) Erfinder: Glück, Dr. Thomas Robert, 81247 München (DE)
(74) Vertreter: Thoma, Michael

(57) **Zusammenfassung**

Die Erfindung betrifft ein Verfahren zur Integration und Koordination von Mess- und/oder Steuersystemen mittels eines auf einer funktionalen Datenstruktur beruhenden Systems, wobei die zu integrierenden Mess- und/oder Steuersysteme jeweils Datenwerte zur Datenstruktur generieren bzw. verarbeiten, sowie Datenstrukturelemente erzeugen und verändern können, mit den Schritten:
a. Generierung einer funktionalen Datenstruktur mit Variablen zur Abbildung der Datenwerte der Mess- und/oder Steuersysteme,
b. inhaltliche Beschreibung der Variablen mittels einer Menge definierender Attribute, wobei wenigstens ein Attribut Variablenreferenzen auf andere Variablen enthalten kann, um Variablennetzwerke abzubilden,
c. Erzeugen eines primären Klons einer Variablen, falls wenigstens eine ihrer definierenden Variablenattributausprägungen durch eines der integrierten Mess- und/oder Steuersysteme geändert wurde,
d. Erzeugen von maschinellen Klonen derjenigen Variablen, die auf abhängigen Variablennetzwerkpfaden der primär geklonten Variablen liegen.

## Beschreibung

Die Erfindung betrifft ein Verfahren zur Integration und Koordination von Mess- und/oder Steuersystemen mittels eines auf einer funktionalen Datenstruktur beruhenden Systems, wobei die zu integrierenden Mess- und/oder Steuersysteme jeweils Datenwerte zur Datenstruktur generieren beziehungsweise verarbeiten, sowie Datenstrukturelemente erzeugen und verändern können.

Steuersysteme verarbeiten im Wesentlichen Ist- und Soll- bzw. Planwerte, wobei dies in komplexeren Anwendungsfällen regelmäßig über mehrere Verarbeitungsebenen ("layer") verdichtend-interpretierend erfolgt: Ausgehend von Rohdaten auf kleinstem Erfassungsmaßstab ("atomare Informationen") werden die Daten über mehrere Verarbeitungsschichten hinweg für unterschiedliche Verwendungszwecke aus unterschiedlichen Perspektiven (und ihrerseits wiederum ggf. unterschiedlichen Liefersystemen) aggregiert. Im Kontext von Datawarehouse-Systemen werden solche Verfahren beispielsweise auch als "ETL-Prozesse" (extract, transform, load) bezeichnet.

Die Verdichtungsschritte können das Verständnis und die Nutzung der einfließenden Informationen erleichtern. Ohne Möglichkeit zur Rekonstruktion ihrer Vorverarbeitung ("Data Lineage Analyse") können sie aber auch zu Fehlinterpretationen und Informationsverlusten führen, bis hin zur Behinderung von Produktionsprozessen.

Allgemein lassen sich Systemintegrationen nach
- Integrationsschnittstellentyp (synchron/asynchron)
- Integrationsrichtung (horizontal/vertikal)
- Integrationsinhalt (logisch/strukturell bzw. physisch/wertmäßig) und
- Integrationsumfang (vollständig/unvollständig)
unterscheiden.

Eine horizontale Steuerungsintegration liegt vor, wenn Steuerungsinformationen auf vergleichbarem Maßstab zusammengeführt werden. Eine vertikale Steuerungsintegration setzt die dementsprechend vertikal-layerübergreifende Verfügbarkeit einer umfassenden data lineage (idealerweise bis zu den Basisdaten) incl. beteiligter Verarbeitungsschritte voraus. Vertikale Steuerungsintegration ist also basisdatengetrieben und vor allem ein Komplexitätsproblem.

Ein marktübliches Lösungsbeispiel mit logischem Schwerpunkt für BI-typische Datawarehouseumgebungen ist bspw. aus der DE 10 2016 05 519 A1 bekannt. Bereits in diesem Fall von im ETL-Kontext weitestgehend standardisierten Datenverarbeitungen stellt die logisch-vertikale Integration bei starker Layer-Orientierung eine große Herausforderung dar.

Der Schwierigkeitsgrad wächst demgegenüber erheblich, wenn übergreifend wenig standardisierte Datenverarbeitungssysteme verlustfrei *sowohl strukturell als auch wertmäßig* integriert werden sollen (also neben einem Verständnis für die (*logischen*) Informationsstrukturen und -verarbeitungsregeln auch die verarbeiteten (*physischen*) Inhalte umfassend nachvollziehbar werden sollen). Empirisch gegebene Anforderungen begnügen sich allenfalls in Ausnahmefällen mit einer simplen, schichtweise-hierarchisierten Verarbeitung, in der industriellen Praxis werden regelmäßig flexiblere Netzstrukturen benötigt.

Marktübliche Integrationslösungen (z.B. SAP im Enterprise Resource Planningincl. Produktionsplanungs- und Steuerungsumfeld) behandeln diese Herausforderung im Wesentlichen durch Vorgabe von Standardprozessen, welche nur bedingt durch die Nutzer anpassbar sind. Dieser systemspezifischen Standardisierung sind in der Praxis sowohl technische als auch wirtschaftliche Grenzen gesetzt, weshalb die prozessualen Bedarfslücken dort üblicherweise weiterhin mit individuellen Lösungen gefüllt werden ("individuelle Datenverarbeitung", kurz IDV). Diese sind dementsprechend wenig bis nicht integriert und stellen somit in der Regel den anspruchsvollsten Anwendungsfall für eine weitergehende, übergreifende Integration dar.

Ein Ziel der Erfindung ist eine vollständige, synchrone und sowohl logische als auch physische Integration von verteilten Mess- und/oder Steuersystemen. Mit dem Verfahren werden auch komplexeste Integrationsprobleme beherrschbar, ohne dabei nennenswerte Informationsverluste in Kauf nehmen zu müssen.

Gelöst wird diese Aufgabe durch ein Verfahren gemäß den Merkmalen des Anspruchs 1. Vorteilhafte Ausführungen des Verfahrens sind Gegenstand der abhängigen Ansprüche.

Eine verlustfreie, vertikale Integration bei vollständiger Kontrollierbarkeit von Verarbeitungsprozessen und Anschlussfähigkeit an heterogene Schnittstellen setzt eine entsprechende funktionale Datenstrukturgestaltung voraus. Erfindungsgemäß wird daher eine funktionale Datenstruktur zur Abbildung von Variablen definiert, um Daten der Mess- und/oder Steuersysteme zu verarbeiten. Bei den Datenwerten, auch als Messwerte bezeichnet, kann es sich beispielsweise um Ist- und Sollwerte, Planwerte, Prognosen, Schätzungen etc. handeln.

Die Möglichkeit zur komplexitätsreduzierten Beherrschbarkeit des im dynamischen Integrationsfall beliebig zunehmenden Komplexitätspotentials ergibt sich erfindungsgemäß aus einer zunächst kontraintuitiv erscheinenden Inkaufnahme einer verfahrens- bzw. systemimmanenten Komplexitätserhöhung bezüglich der funktionalen Datenstruktur. Wesentliche Probleme der potentiell extremen koordinativen Komplexität der Steuerung verteilter Systeme werden durch einfache, nicht verlustbehaftete Verfahrensschritte gelöst.
Die über das beschriebene Verfahren integrierten Mess- und/oder Steuersysteme können dabei nicht nur die Dateninhalte, sondern auch ihre Strukturen im laufenden Betrieb gestalten (womit z.B. Parameteroptimierungen in konkreten Verarbeitungsläufen über in Echtzeit optimierbaren Strukturen ermöglicht werden), bei potentiell vollständiger Kontrolle über alle Änderungs- und Verarbeitungsereignisse für alle beteiligten Schnittstellen.
Dieses Ziel wird u.a. durch einen Verzicht auf Updateprozesse bezüglich der definierenden Anteile der funktionalen Datenstruktur erreicht. Die Erfindung realisiert also eine verfahrenstechnische Komplexitätsreduktion durch eine kontrollierbare, strukturelle Komplexitätserhöhung.
Dieses Verfahren erlaubt aufgrund seiner spezifischen funktionalen Datenstrukturgestaltungsentscheidungen zudem einen organisationsunabhängigen Einsatz, es ist durch den grundlegend basisdatengetriebenen Ansatz "beliebig" anschlussfähig.

Das wesentliche Element der Datenstruktur stellen Variablen dar, welche eine Menge von Attributen besitzen. Diese Attribute werden nachfolgend auch als "Variablenattribute" bezeichnet. Inhaltlich werden die Variablen mittels einer Menge definierender Attribute identifiziert. Wenigstens eines der definierenden Variablenattribute enthält Variablenreferenzen und gibt insofern an, von welchen Variablen der Variablengrundgesamtheit im System die betreffende Variable abhängt (inclusive Selbstreferenz, um zum Beispiel c.p. periodenausgeprägte Unterscheidungen zu unterstützen). Zu unterscheiden sind die Variablen*attribut*ausprägungen von den den Variablen zugeordneten Variablenausprägungen bzw. Variablenwerten, welche die Datenwerte der Mess- und/oder Steuerungssysteme abbilden.

Mit der nachfolgend detaillierter beschriebenen Datenstruktur lassen sich die Variablen und Datenwerte der Mess- und/oder Steuersysteme als Netzwerke von Variablen modellieren (zum Beispiel in Form eines gerichteten, azyklischen Graphen im Berechnungskontext), deren Knoten durch die einzelnen Variablen gebildet werden und deren Kanten sich aus den Variablenreferenzen ergeben. Eine Menge von insofern zusammenhängenden Kanten wird nachfolgend als "Pfad" bzw. "Netzpfad" bezeichnet.
In dieser Grundform lassen sich beliebige Mess- und/oder Steuersysteme unabhängig von lokalen Konventionen verfahrenstechnisch integrieren.

Das Attribut mit Variablenreferenzen enthält im einfachsten Fall nur-assoziative Zuordnungen anderer Variablen zur betrachteten Variable. Regelmäßig enthält es jedoch detailliertere Angaben zur Bestimmungs- bzw. Berechnungsvorschrift des Datenwertes der betrachteten Variable, zum Beispiel Funktionen, welche von einer oder mehreren Variablen abhängen.

Mess- und/oder Steuersysteme haben als Schnittstellensysteme Zugriff auf die funktionale Datenstruktur mit der Möglichkeit, auch neue Variablen zu erzeugen. Systemschnittstellen sind als Menge von Variablen definiert. Um eine verlust- und störungsfreie Integration sowie Koordination zwischen den Schnittstellensystemen zu ermöglichen, wird bei definierender Änderung eines oder mehrerer Schnittstellenelemente in der Regel ein koordinierter Klonprozess der davon abhängigen Netzpfade ausgelöst. Ein definierend ändernder Eingriff ist eine Änderung wenigstens einer der definierenden Variablenattributausprägungen von einer oder mehreren Variablen.
Dieser Vorgang (und synonym eine davon betroffene Variablenmenge) wird hier nachfolgend als "Edition" bezeichnet. Mit Abschluss der Edition werden demnach regelmäßig Klone der geänderten und davon abhängigen Variablen (also der abhängigen Pfade im Variablennetz) erstellt.
Die Klone der durch die Mess- und/oder Steuerschnittstellensysteme definierend geänderten Variablen werden hier als Primärklone bezeichnet. Neben diesen primären Klonen werden weiterhin Variablen analog koordiniert geklont, welche in ihrer Variablenreferenz die Originale zu den primären Klonen enthalten (im Folgenden als "Vorgänger" bezeichnet). Die Klonvorgänger-Variable wird in der Variablenreferenz durch den Klon ersetzt.

Die so erzeugten, von den Primärklonen direkt oder indirekt abhängigen Klone werden nachfolgend als sekundäre bzw. maschinelle Klone bezeichnet; deren Erzeugung löst wiederum Klonvorgänge von Variablen aus, welche ihrerseits auf die Vorgänger der maschinellen Klone verweisen, usw., bis keine weiteren Abhängigkeitsbeziehungen mehr gefunden werden oder ein explizit als final interpretierter Netzknoten erreicht wurde:
Bei den letzten Klonen auf diesen Pfaden (und ihren Vorgängern) handelt es sich um "finale Variablen".
Variablen ohne Variablenreferenzinhalte werden hier als "atomare Variablen" bezeichnet, im Kontext gerichteter Netzwerke entsprechend als "finale Inputvariablen" bzw. "atomare Outputvariablen".

Im Klonvorgang werden grundsätzlich alle nicht vom Schnittstellensystem geänderten Attribute der Variable kopiert, die von der Änderung betroffenen Ausprägungen entsprechend angepasst übernommen, und vorzugsweise nichtdefinierende weitere Informationen ergänzt.

Variablen werden also durch *definierende Attribute* identifiziert (deren Ausprägungsänderungen durch Schnittstellensysteme zu den vorbeschriebenen Klonprozessen führen). Ebenso können die Variablen durch *nichtdefinierende Attribute* beschrieben werden.

Beispiele definierender Attribute sind
- Kontextmerkmale, etwa zur Identifikation zugeordneter Prozesse, Betriebsmittel oder Organisationsstruktureneinheiten
   - Messgrößen wie z.B. Menge, Zeit, Kosten oder qualitative Merkmale
- die Messperspektive von Mess- bzw. Datenwerten (z.B. IST/Soll/Plan/Prognose)
   - Periodenkategorie (z.B. Jahr, Monat, Woche, Tag, Stunde, Timestamp) und
   - Periodenausprägung, sowie die bereits vorgenannten
   - Variablenreferenzen

Beispiele für nichtdefinierende Attribute, welche bei Ausprägungsänderungen keine strukturellen Anpassungen des Systems durch Klonprozesse auslösen, aber verfahrensrelevant sind, sind
- Kategorisierungen der definierenden Kontexte und Messgrößen
- Kommentare
- Attribute zur Berechtigungssteuerung
- Attribute zur Kennzeichnung des Klontriggerereignistyps (primär/maschinell)
- Attribute zur Aufnahme von Vorgänger-Referenzen (im Klonkontext)
- Attribute zur Kennzeichnung von CRUD-Ereignissen (create, read, update, delete), z.B. Ereignisart, User, Timestamps, Klonlauf-Identifkationsmerkmale, etc.

Bevorzugt ist vorgesehen, dass alle oder zumindest ein Teil der in einem Klonvorgang erzeugten Variablen mit einer eindeutigen Klonnummer versehen werden, die beispielsweise in einem geeigneten Attribut der Variable gespeichert werden. Durch diese Maßnahme lässt sich die Historie der Klone dokumentieren. Besonders bevorzugt ist es, wenn sämtliche während eines einzelnen Klonprozesses erzeugten Variablen mit identischer Klonnummer versehen werden. Dadurch ist sichergestellt, dass im Nachhinein eindeutig feststellbar ist, welche Klone durch gemeinsame Editionsereignisse erstellt wurden.

Von besonderem Vorteil ist es ebenso, wenn ein Variablenklon auch mit einer entsprechenden Information gespeichert wird, die einen eindeutigen Verweis auf die ursprüngliche Variable enthält, so dass eine Zuordnung des Klons zur geklonten Vorgänger-Variable stets möglich ist. Dieser Verweis wird beispielsweise mittels des zuvor genannten Attributes zur Aufnahme der Vorgänger-Referenz gespeichert.

Auch ist es vorteilhaft, wenn für die Variablenklone hinterlegt wird, ob es sich um einen Primärklon handelt (d.h. der Primärklon wurde durch Zugriff des Mess- und/oder Steuersystems erzeugt), oder einen maschinellen Klon. Letzterer wird maschinell während des Klonprozesses erzeugt, bedingt durch die direkte oder indirekte Abhängigkeit zu definierend geänderten, den Klonprozess auslösenden Variablen.

Es lässt sich in diesem Zusammenhang eine Vielzahl weitergehender Informationen zur Variable speichern, um die Nachvollziehbarkeit des Klonprozesses und damit der gesamten Datenstruktur weiter zu optimieren. Weitere Informationen, die jeweils in passenden Attributen der Variable bereitgehalten werden, können eine weitergehende Beschreibung des konkreten Klonprozesses enthalten sowie ein oder mehrere den Klonprozess auslösende Ereignisse und/oder der auslösenden Schnittstellensysteme bzw. Nutzer. Sinnvoll sind auch passende Zeitstempel, um eine chronologische Einordnung des Klonprozesses und der insofern zusammenhängenden Klone sicherzustellen.

Beim Schnittstellenzugriff eines einzelnen Mess- und/oder Steuersystems auf die Datenstruktur kann zwischen unterschiedlichen Zugriffvarianten differenziert werden.
Eine erste Variante ist durch einen *wertändernden bzw. wertzuweisenden Zugriff* charakterisiert, durch welchen Änderungen bzw. Zuweisungen des Datenwertes wenigstens einer Variable oder ihrer Attributausprägungen veranlasst wird.
Die Änderung des Datenwertes einer Variablen kann aufgrund der netzartigen Datenstruktur Auswirkungen auf die Datenwerte/Messwerte einer Vielzahl abhängiger Variablen haben.
Die Änderung von (insbesondere definierenden) Attributausprägungen kann infolge der dadurch ausgelösten Klonprozesse auch zu strukturellen Änderungen führen, was der zweiten Zugriffsvariante seitens der Schnittstellensysteme entspricht.
Die Erfindung ermöglicht neben der Strukturgestaltung durch Generierung insb. von Variablen als wesentliche Strukturelemente also auch *strukturändernde Zugriffe* von Schnittstellensystemen auf die Datenstruktur, wodurch nicht nur Datenwertänderungen einzelner Variablen erfolgen können, sondern auch insbesondere deren struktureller Zusammenhang gestaltet werden kann.

Bei einem rein datenwertändernden Variablenzugriff erfolgt lediglich eine Ermittlung der Datenwerte der als funktional zusammenhängend interpretierten Variablen. Aus Performancegründen ist es in diesem Fall sinnvoll, wenn Wertberechnungen/Wertzuweisungen für einen Datenwert einer Variable erst dann begonnen werden, wenn bereits alle Wertermittlungen/Wertzuweisungen ihrer referenzierten Variablen abgeschlossen wurden.

Es besteht die Möglichkeit, den Schnittstellenzugriff für ein Mess- und/oder Steuersystem auf einen begrenzten Umfang der Datenstruktur zu limitieren. Denkbar ist hier die Definition einer logischen Teilstruktur, beispielsweise durch die Angabe einer Menge für das Schnittstellsystem sichtbarer Variablen, hier wie oben als Edition bzw. im Kontext von Variablenwertermittlungen nachfolgend als "Segment" bezeichnet.

Möglich ist weiterhin die Interpretation von aus physischer Perspektive nichtfinalen Variablen als finale Variablen für bzw. durch Schnittstellensysteme: Klon- und Wertermittlungsvorgänge enden dann mit diesen Variablen, auch wenn tatsächlich weitere Variablen im Netz existieren, welche darauf referenzieren.
Ergänzend oder alternativ können auch aus physischer Betrachtung nichtatomare Variablen logisch als atomare Variablen interpretiert werden, d.h. dass ihre Variablenreferenzen logisch ignoriert werden.

Hierdurch lassen sich logische Teilstrukturen der aus physischer Perspektive vollständigen funktionalen Datenstruktur definieren. Ein wertzuweisender oder strukturändernder Zugriff, der durch den funktionalen Zusammenhang eine erweiterte Menge an Variablen umfassen kann, lässt sich so auf logische Teilstrukturen limitieren, es ist andererseits aber auch vorstellbar, dass sich solche Zugriffs auch verändernd auf die physische Datenstruktur auswirken.

Im Rahmen des Verfahrens können Datenstrukturen und -werte historisiert und Protokoll- bzw. Loggingdaten zum technischen Verfahren selbst generiert werden. Gemäß einer optionalen Ausführung des Verfahrens besteht die Möglichkeit, zumindest einen Teil, bevorzugt alle Datenstrukturen und Datenwerte wie beispielsweise Variablennetzstrukturen, Variablenwerte und deren Veränderungen zu visualisieren, was auch graphisch-intuitive Muster-, Szenarien- und Treiber- oder Sensitivitätsanalysen ermöglicht und sowohl Systemadministration als auch die Orientierung für Schnittstellensysteme erleichtert.

Aus dem Einsatz des Verfahrens ergibt sich eine quasi-automatische Inventarisierung der Einsatzfelder mit umfassenden Data Lineage Analysemöglichkeiten (sowohl bezüglich Strukturen und Verarbeitungsregeln als auch der Verarbeitungsergebnisse).

Es kann weiterhin auch für die Automatisierung von reverse engineering Prozessen genutzt werden (in Kombination mit entsprechenden Parsern für Sourcecodes in ansonsten wenig bis nicht dokumentierten Bereichen), indem die funktionale Datenstruktur zur Visualisierung von (ggf. automatisiert ermittelten) Verarbeitungsprozessen eingesetzt wird.

Neben dem erfindungsgemäßen Verfahren betrifft die vorliegende Erfindung ebenso ein System bestehend aus mehreren, in der Regel verteilten Mess- und/oder Steuersystemen sowie einer zentralen oder verteilten Einheit (integratives Steuersystem) zur Verwaltung der funktionalen Datenstruktur.
Das integrative Steuersystem weist eine Verarbeitungslogik auf, bei deren Aufruf die Schritte des erfindungsgemäßen Verfahrens ausgeführt werden. Demzufolge zeichnet sich das System durch dieselben Vorteile und Eigenschaften aus, wie sie bereits vorstehend anhand des erfindungsgemäßen Verfahrens aufgezeigt wurden. Auf eine wiederholende Beschreibung wird aus diesem Grund verzichtet.

Das hier beschriebene Verfahren ermöglicht darüber hinaus eine maschinell unterstützte, vereinfachte Systeminitialisierung, beispielsweise durch eine modifizierte Kopie prototypischer Netze oder eine entsprechende Nutzung der systemimmanenten Klonlogik (initiale Anlage prototypischer Netze, welche nach Modifikation analog geklont werden), bzw. durch ein systemeigenes Migrationsverfahren, in welchem eine Schnittstellensystemdatenstruktur auf das Verfahren abgebildet wird.
Die im System vorhandenen Strukturen und Werte lassen sich ihrerseits (fallweise auch ausführbar, z.B. bei Tabellenkalkulationssystemen) in Standardformate des Schnittstellensystems exportieren, um lokal-asynchrone Bearbeitungsprozesse zu unterstützen.

Von der Erfindung umfasst ist auch ein Computerprogramm, bei dessen Ausführung durch einen Computer das Verfahren gemäß der Erfindung ausgeführt wird.

Weitere Vorteile und Eigenschaften der Erfindung sollen nachfolgend anhand eines in den Zeichnungen dargestellten **Ausführungsbeispiels** näher erläutert werden. Es zeigen:
- Figur 1:: eine vereinfachte grafische Darstellung eines gerichteten, azyklischen Graphen als spezielles Realisierungsbeispiel einer Datenstruktur,
- Figuren 2a - 2e:: Darstellungen des Graphen gemäß Figur 1 zur Verdeutlichung der Vorgehensweise bei einer Wertänderung beziehungsweise Wertzuweisung durch ein Schnittstellensystem,
- Figur 3:: eine weitere einfache, beispielhafte Darstellung eines Variablennetzes als Verwirklichung einer funktionalen Datenstruktur,
- Figuren 3a, 3b:: das Variablennetz gemäß Figur 2 zur Beschreibung des erfindungsgemäßen Klonprozesses, im Beispielfall bei zwei definierenden Variablenänderungen,
- Figuren 4a, 4b:: unterschiedliche beispielhafte Darstellungen zur Illustration der Messung und Steuerung eines Produktprozesses,
- Figur 5:: eine zusammenfassende Illustration eines Integrations- und Koordinationsszenarios zwischen mehreren Schnittstellensystemen.

Der Kerngedanke des Verfahrens sowie konkrete Anwendungsmöglichkeiten sollen nachfolgend nochmals im Detail aufgezeigt werden. Das neue Verfahren ermöglicht eine vollständige, synchrone und sowohl logische als auch physische Integration von Mess- und/oder Steuerungssystemen, über welches auch hochkomplexe Integrations- und Koordinationsprobleme technisch beherrschbar bleiben und nicht nur wertmäßig-inhaltliche, sondern auch strukturell-gestaltende Optimierungsproblemlösungen ermöglicht werden: Die potentiell extreme koordinative Komplexität der Steuerung verteilter Systeme wird hier durch einfache Verfahrensschritte ohne Informationsverluste erheblich vereinfacht. Die über das beschriebene System integrierten Mess- und/oder Steuersysteme können bei optimierter Leistung ihre Inhalte auch strukturell im laufenden Betrieb verändern, wodurch z.B. Parameteroptimierungen in konkreten Verarbeitungsläufen über in Echtzeit flexibel gestaltbaren Strukturen ermöglicht werden, bei potentiell vollständiger Kontrolle über alle Änderungs- und Verarbeitungsereignisse für alle beteiligten Schnittstellensysteme.

Das System bietet insofern eine wesentliche Basis zur Umsetzung auch von autonomen Steuerungslösungen für vielfältige technische Anwendungsfelder. Die nachfolgend beschriebenen Designentscheidungen bzgl. einer funktionalen Datenstruktur sowie der Verfahrensschritte und übergreifenden Systemaspekte stellen die wesentliche Grundlage der Erfindung dar.

Eine verlustfreie vertikale Integration ist basisdatengetrieben, eine vollständige Nachvollziehbarkeit von Verarbeitungsprozessen bei Anschlussfähigkeit an heterogene Schnittstellen setzt daher eine entsprechende funktionale Datenstrukturgestaltung voraus.

Das basale, atomare Element ist hier eine Variable, welche inhaltlich über eine Menge definierender Attribute identifiziert wird. Sie umfasst exemplarisch:
- eine oder mehrere Kontextausprägungen (z.B. zugeordnete Organisationsstruktureinheit, Prozess, etc.),
- Messgröße,
- Messperspektive (z.B. IST/Soll/Plan/Prognose/...),
- Periodenkategorie (z.B. Jahr, Monat, Woche, Tag, Stunde, Timestamp),
- Periodenausprägung,
- Variablenreferenzen (Funktionen von anderen Variablen, z.B. mathematische Funktionen (z.B. deterministisch, stochastisch) oder einfache Zuordnungen, etc.),

Ebenso können die Variablen auch nichtdefinierende Attribute besitzen, wie beispielsweise
- zur Kategorisierung von Kontexten und Messgrößen,
- zur Kommentierung,
- zur Berechtigungssteuerung,
- zur Kennzeichnung des Klontriggerereignistyps (primär/maschinell)
- zur Aufnahme einer Referenz zum Vorgänger der Variablen (im Fall von Klonvorgängen),
- für die Kennzeichnung von CRUD-Ereignissen (create, read, update, delete), z.B. Ereignis-Arten, User, Timestamps, Klonlauf-Identifikationsmerkmale, etc.

Zur Unterscheidung der
- Werte/Ausprägungen der Variablen (i.e. der Messwert zum Attribut Messgröße, wobei "Messung" allgemein als Wertzuweisung zu einer Variablen interpretiert wird; die Messgrößen ihrerseits können qualitativ oder quantitativ sein) von den
- Werten/Ausprägungen der Variablenattribute
werden nachfolgend zur besseren Orientierung "Variablenwerte" von "Attributwerten" unterschieden.

Um auch hochkomplexe Schnittstellensysteme aufnehmen zu können, werden n:m-Beziehungen zwischen Variablen ermöglicht, also Netzwerke von Variablen. Damit ist auch die Abbildbarkeit beliebiger Organisationsmodelle gewährleistet: Ein Organisationsmodell beschreibt die Anordnung von Systemkomponenten als Organisationseinheiten sowie deren Prozesse. Netzwerke stellen die allgemeinste Form eines strukturellen Organisationsmodells dar, als deren speziellere Ausprägungen andere Organisationsstrukturen interpretiert werden können (z.B. hierarchische Anordnungsbeziehungen). Die basale Datenstruktur erlaubt somit auch z.B. eine flexible Verteilung zwischen Zentralisierung und Dezentralisierung von Produktionsprozessen und deren Steuerung.

Die Variablen entsprechen insofern den Knoten von Variablennetzwerken. Mindestens über deren Variablenreferenzen lassen sich die Kanten identifizieren. Je nach Anwendungsfall erfolgt die Koordination und Steuerung einschlägiger Netzänderungen also durch die Gestaltung der Variablen, über welche sich jeweils das enthaltende "physische" Netz identifizieren lässt. Teilmengen daraus werden hier als "logische" Netze bezeichnet.

Die Variablen determinieren die Struktur des abgebildeten Systems. Den Variablen als individuellen Strukturelementen können beliebig viele Ausprägungen (Variablenwerte) zugewiesen werden; die Wertzuweisungen können weiter spezifiziert werden, z.B. durch "Anlagen".

Im besonderen Beispielfall einer Integration verteilter Systeme mit Kalkulationsfokus werden diese als gerichtete azyklische Graphen behandelt: In dieser Grundform lassen sich verteilte Kalkulationsmodelle unabhängig von lokalen Spezifika integrieren, teilen, klonen oder generell übergreifend inhaltlich verändern. Die damit verbundene hohe fachliche Komplexität wird durch eine entsprechende Attributausprägungswahl der Variablen beherrschbar, mit Ermöglichung einer vollständigen Kontrolle bzgl. aller Änderungen.
Eine Variable verhält sich im Kalkulationsfall hinsichtlich einer anderen Variable als Inputvariable, wenn die andere Variable auf sie referenziert.
Es werden insbesondere nach ihrer Position im Netzwerk unterschieden:
- atomare Inputvariablen (es gibt davon abhängige Variablen, aber keine Variablen, welche in sie einfließen)
- finale Outputvariablen (es gibt diesbezüglich Inputvariablen, sie fließen aber ihrerseits in keine anderen Variablen ein)

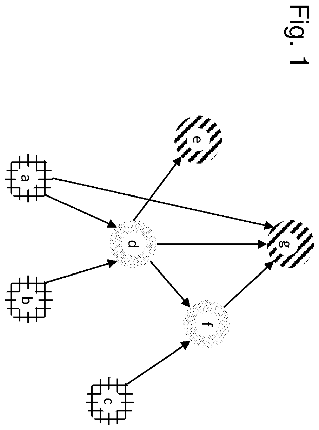

Figur 1 zeigt ein nur-illustratives Beispiel eines einfachen gerichteten, azyklischen Graphen. Die Variablen a, b und c sind atomare Inputvariablen, während es sich bei den Variablen e und g um finale Outputvariablen handelt. Wertzuweisungen zu einer Variablen im Netz lösen entlang der in den Variablenreferenzen definierten Abhängigkeiten Wertzuweisungen bzgl. der abhängigen Variablen aus. Diese Wertzuweisungen werden über einen eindeutigen Laufwert identifiziert. Die Zuweisungsläufe können ihrerseits jeweils kommentiert und mit identifizierenden bzw. beschreibenden Attributen versehen werden.

Ein Szenario im engeren Sinn ist eine Menge von Wertausprägungen bestimmter Variablen eines Netzes, welche aus physischer oder logischer Perspektive atomare Inputvariablen darstellen. Ein Szenario im weiteren Sinn umfasst darüber hinaus die Gesamtmenge aller durch das Szenario im engeren Sinn ausgelösten Wertzuweisungen in den davon abhängigen Pfaden des entsprechenden Netzes.

Eine Systemschnittstelle ist als Menge von Variablen definiert, über welche die Schnittstellensysteme mit dem integrativen Steuersystem kommunizieren. Schnittstellensysteme haben zwei grundlegende Perspektiven zum System:
- strukturell gestaltend (Modifikation von Netzen durch die Edition von Knoten, insb. indem deren definierende Attributwerte geändert werden; neben dem Vorgang selbst wird auch eine Menge davon betroffener Knoten hier als "Edition" bezeichnet).
   Innerhalb von Editionen ist unterscheidbar, welche Variablen logisch als finale Outputs interpretiert werden sollen (also nach Finalisierung einer Edition im Rahmen der dadurch ausgelösten Klonprozesse nicht mehr in weitere Variablen einfließen sollen).
- wertmäßig verändernd bzw. wertzuweisend: Mengen von Variablen, deren Variablenwerte zugewiesen bzw. ermittelt werden sollen, werden hier als "Segmente" bezeichnet. Innerhalb von Segmenten ist unterscheidbar, welche Variablen sich logisch als atomare Inputs verhalten bzw. ob und welche Variablen logisch als finale Outputs interpretiert werden sollen. Werden keine atomaren Inputs spezifiziert, werden die physisch-atomaren Inputs zu den Elementen des Segmentes ermittelt. Werden keine finalen Outputs spezifiziert, werden die Werte der von den atomaren Inputs abhängigen Pfade des Netzes als Zuweisungsziel ermittelt.

Die Menge der über die Variablenreferenzdefinitionen voneinander abhängigen Variablen definiert ein physisches Netz. Segmente (als Teilmengen physischer Netze) können auch als logische Netze interpretiert werden.
Edition und Segment sind bei nicht vollständiger Auswahl aller Netzvariablen also logische Sichten auf die durch die Variablen gegebenen physischen Netze.

Die strukturelle und wertmäßige Netzperspektive sind insofern interdependent, als durch die Interpretation einer nicht atomaren Inputvariablen als atomarer Input implizit ein strukturelles Veränderungsereignis gegeben sein kann (mindestens durch implizite Modifikation einer Variablenreferenzausprägung infolge einer Variablenwertüberschreibung, bei evtl. Edition weiterer definierender Attribute der betroffenen Variablen).

Die Ermittlung eines Szenarios im weiteren Sinn beginnt entweder
- indirekt über die Identifikation von Zielvariablen, zu welchen die atomaren Inputs gefunden werden, oder
- über die Identifikation von atomaren Inputs, ggf. bei zusätzlicher expliziter Identifikation von Zielvariablen, bis zu welchen die Wertermittlung erfolgen soll.

**Variablenwertänderungen bzw. -zuweisungen** zu atomaren Inputvariablen führen zu einer sukzessiven Variablenwertermittlung derer abhängiger Pfade bis zu den finalen Outputvariablen. Die Variablenwertermittlung einer abhängigen Variable sollte aus Performancegründen dann beginnen, wenn alle neuen Werte ihrer Inputvariablen ermittelt wurden. Die Reihenfolge der Variablenwertermittlungen kann ansonsten bei Berücksichtigung entsprechender Zielfunktionen weiter optimiert werden.

Die im Rahmen einer Szenarienermittlung zusammengehörigen Variablenwerte werden durch einen zugewiesenen eindeutigen Laufwert identifiziert und bzgl. ihres Kontextes gekennzeichnet, um eine vereinfachte technische Rekonstruktion von Szenarienläufen zu ermöglichen.

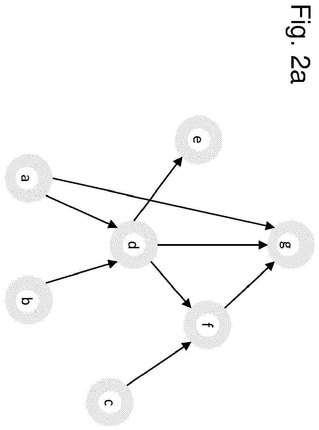

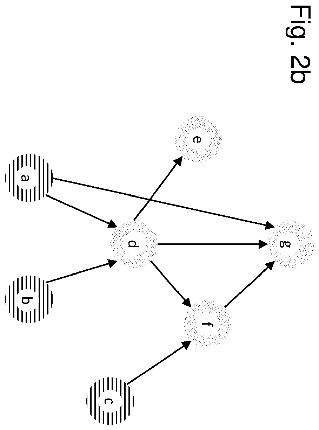

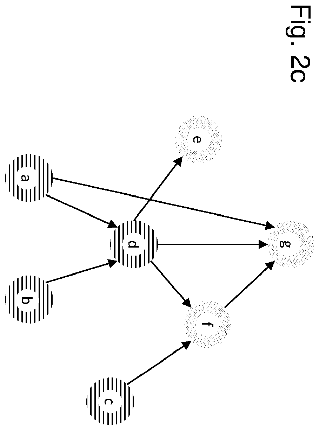

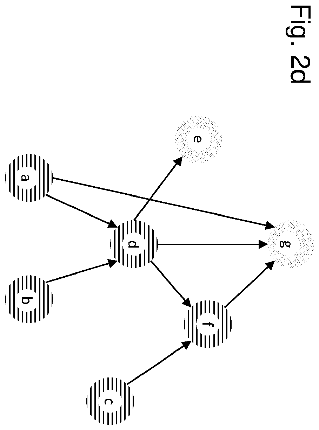

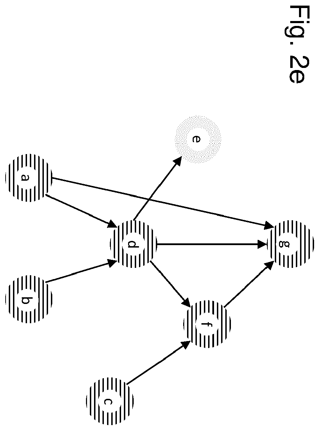

Ein illustratives, nicht abschließendes Beispiel wird anhand der Darstellungen der Figuren 2a bis 2e erläutert. Figur 2a greift nochmals die Variablennetzstruktur der Figur 1 auf. Ermittelt werden soll nun ein Szenario bzgl. der atomaren Inputvariablen a, b, c bzgl. einer explizit gegebenen finalen Outputvariablen g. Das physische Netz umfasst zwar auch die finale Outputvariable e, welche jedoch hier aufgrund der logischen Teilsicht nicht berücksichtigt wird. Bei Figur 2b erfolgt nun eine unmittelbare Wertzuweisung zu den Variablen a, b und c. Das hinsichtlich der finalen Outputvariablen g beschränkt zu ermittelnde Szenario im weiteren Sinn beinhaltet ebenfalls die abhängigen Variablen d und f. Die Variable d kann hier zuerst ermittelt werden, was in Figur 2c angedeutet ist. Erst nach Wertermittlung der Variable d ist die Variable f ermittelbar, wie dies in Figur 2d angedeutet wird. Nachdem die neuen Werte der zur Ermittlung von g erforderlichen Inputvariablen a, d und f zur Verfügung stehen (Figur 2d), kann im letzten Schritt schließlich der finale Outputwert von g bestimmt werden (s. Figur 2e).

Eine **Netzstrukturänderung** wird durch eine oder mehrere Änderungen definierender Variablenattributausprägungen einer oder mehrerer Variablen ausgelöst. Um die Änderungsereignisse und Strukturen sowohl technisch als auch fachlich einfach kontrollierbar zu halten, führen definierende Variablenänderungen grundsätzlich unter sonst gleichen Bedingungen zu einem Klon der betroffenen Variablenmenge sowie zu einem koordinierten Klonen derer abhängiger Pfade bis zu den jeweiligen finalen Outputvariablen. Um nachhaltig eine vereinfachte übergreifende Kontrollierbarkeit zu erreichen, wird die Generierung vermeintlich redundanter Strukturelemente also bewusst in Kauf genommen. Evtl. erforderliche strukturelle Bereinigungen können ansonsten regelbasiert bzw. asynchron erfolgen (z.B. durch von allen relevanten Schnittstellensystemen vorgenommene, konsensuelle Löschvormerkungen, um unkontrollierte Informationsverluste zu vermeiden).

Logisch als finale Outputs zu interpretierende Variablen können dabei explizit vorgegeben werden, um Ressourcen zu schonen (es sind nicht in jedem Fall die gesamten abhängigen Pfade zu klonen). Die im Rahmen eines Klonlaufs erzeugten Variablen erhalten dieselbe Klon-Laufnummer und einen Verweis auf ihre Vorgänger, d.h. ihre Ursprungsvariable. Die Klonläufe können zusätzlich weiter spezifiziert werden.

Die Variablen definieren eindeutig die sie enthaltenden physischen Netze ("Variablen-Netz-Äquivalenzregel"). Allerdings können durch die Pfadklonvorgänge (bei isolierter Betrachtung vermeintlich) redundante Variablen entstehen. Für die Identifikation einer Variablen sind also deren definierenden Attributausprägungen alleine nicht ausreichend, sofern es sich nicht um atomare Inputs handelt: Es ist grundsätzlich auch ihr Netzzusammenhang zu berücksichtigen.

Die geklonten Variablen werden dahingehend gekennzeichnet, ob sie als abhängige Pfadelemente rein technisch geklont wurden, oder ob es sich um die primären (Pfad)Klontriggerelemente handelt (also die ersten Klone der definierend geänderten Variablen; die primären Klontriggerereignisse können dort aus Performancegründen zusätzlich festgehalten werden). Auch die Überschreibung eines vormals ermittelten Wertes einer Variablen mit einem exogen gegebenen Wert kann implizit einer Strukturänderung entsprechen (z.B. wenn eine nichtatomare Inputvariable zum atomaren Input geklont wird), was analog zur beschriebenen Logik einen Klon der abhängigen Pfade auslösen kann.

Weil nicht immer jedes Schnittstellensystem auch vollständige Transparenz benötigt bzw. besitzen darf, wird das Rollen-/Rechtekonzept auf Datensatzebene realisiert (sowohl strukturell als auch wertmäßig). Klonprozesse sind dabei grundsätzlich unabhängig vom Berechtigungskonzept: Eine für die Erstellung bestimmter primärer Klone berechtigte Rolle kann also auch die Erzeugung von Variablen auslösen, für welche sie selbst nicht berechtigt ist, bestehende Vorgänger-Rechte werden mitgeklont. Ausnahmen von dieser Regel sind konfigurierbar.

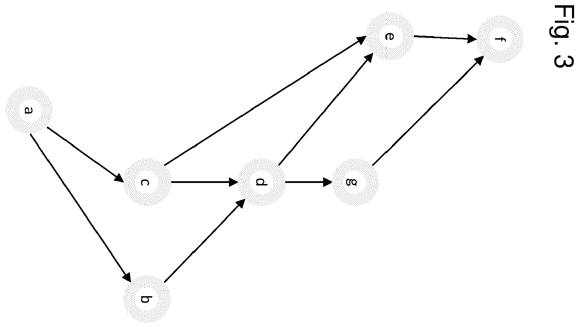

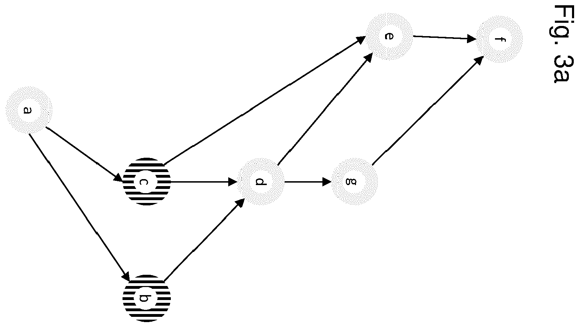

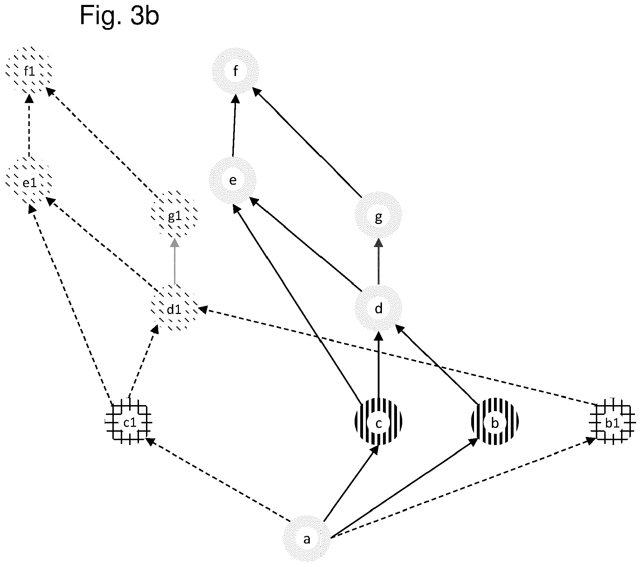

Ein illustratives, nicht abschließendes Beispiel ist in den Figuren 3, 3a und 3b gezeigt, diese wiederum ein Variablennetz als gerichteten, azyklischen Graphen visualisieren. Das Netz besteht hier aus den Variablenelementen a bis f, mit a als atomarem Input und f als finaler Outputvariable. Im ersten Schritt wurden gemäß Figur 3a die Variablen b und c durch ein Schnittstellensystem bezüglich einer oder mehrerer definierender Attributausprägungen geändert (zur vereinfachten Visualisierung hier ohne Netzelemente zu entfernen, solche hinzuzufügen oder die Abhängigkeitsstruktur zu ändern), was zum Auslösen eines Klonprozesses führt. Der Klonprozess hat hier also zwei gemeinsam auslösende Ereignisse.

Die definierenden Variablenattributänderungen führen zum Klonen der betroffenen Variablen c und b. Die dadurch entstehenden primären Klone sind hier als c1 und b1 bezeichnet. Durch den Klonprozess werden ebenfalls maschinelle Klone der abhängigen Variablen d, g, e bis hin zur finalen Outputvariable f erzeugt, die hier als d1, g1, e1 und f1 bezeichnet sind. Das ursprüngliche Netz bleibt dementsprechend erhalten, es wird lediglich um die geklonten neuen Elemente b1, c1, d1, e1 und f1 erweitert.

In Abhängigkeit von der Anzahl an Änderungen, ihrer Art und Positionierung im Netz können die Netzstrukturen exponentiell wachsen. Die damit verbundene Komplexitätszunahme bleibt aber durch folgende Designelemente technisch beherrschbar:
- technisch-fachliche Klammer durch eindeutiges technisches Identifikationsmerkmal des Klonlaufs
- Unterscheidbarkeit maschineller (hier: d1, e1, g1, f1) und primärer Klone (hier: c1, b1)
- Spezifikation weiterer Informationen zum Klonlauf (z.B. änderndes System, Zeitstempel, Kontext, auslösende Ereignisse (welche Variablen wurden bzgl. welcher definierender Attributwerte inwiefern geändert, etc.).
- c.p. Netzkontext der Variablen

Die oben beschriebene funktionale Datenstruktur in Kombination mit den grundlegenden Verfahrensschritten des auf dieser Grundlage umgesetzten Systems ermöglicht eine umfassende und verlustfreie Integration von und Koordination zwischen Schnittstellensystemen, insbesondere mit Mess- und/oder Steuerungsfokus, bei hohen Flexibilitätsanforderungen. Sie fördert als Zusatznutzen strukturelle Redundanzfreiheit durch Vermeidung nichtintegrierter Archive. Es ist leicht nachvollziehbar, dass die darüber integrierten Systeme nicht nur wertmäßige Parameter bei gegebenen Steuerungsgrundlagen optimieren können, sondern sich darüber hinaus zur Laufzeit auch deren Strukturen bei minimierten Kollisionsrisiken (etwa durch Updateanomalien) dynamisch anpassen lassen, bei potentiell vollständiger Kontrolle über alle Elemente und Wertzuordnungen für die beteiligten Schnittstellensysteme.

Dies erlaubt neben übergreifenden Konsistenzprüfungen und Performanceoptimierungen insbesondere dynamische Mess- und/oder Steuerungsprozessoptimierungen höherer Ordnung, bis hin zu sich autonom optimierenden Steuersystemen, insbesondere bei Einsatz von Schnittstellensystemen auf Basis von künstlicher Intelligenz.
Auf dem Verfahren beruhende Systemumsetzungen können ihrerseits selbst als Basis zur Umsetzung eines künstlich intelligenten Integrations- und Steuerungssystems dienen.

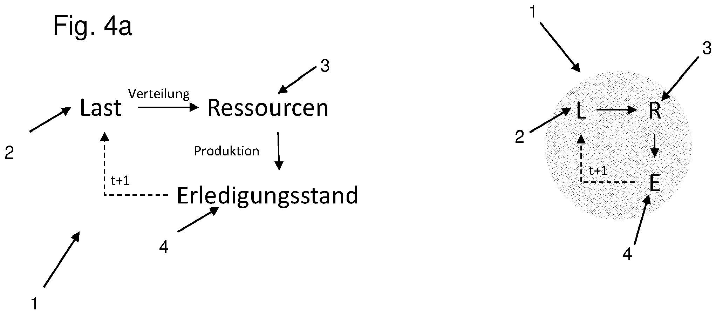

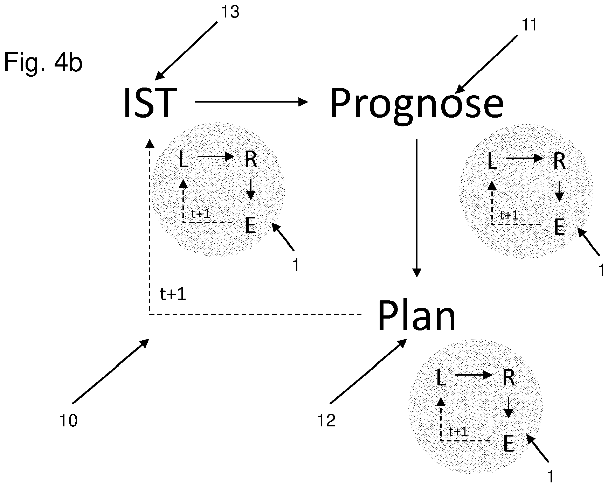

Dieser Grundnutzen wird nachfolgend an einem stark vereinfachten, nicht repräsentativen Beispiel illustriert, das in den Figuren 4a und 4b wiedergegeben ist.

Gegeben sei der in Figur 4a dargestellte Produktionsprozess 1, in welchem in einer Periode t Arbeitslast 2 auf Produktionsressourcen 3 verteilt wird, welche die Arbeit ganz oder teilweise erledigen. Als Ergebnis einer Prozessdurchführung ergibt sich der Erledigungsstand 4 der Produktion; evtl. nicht erledigte Teile der Arbeitslast 2 fließen in der nächsten Produktionsperiode t+1 in die Lastmenge mit ein.

Ein entsprechendes Steuersystem 10 für den Produktionsprozess 1 lässt sich typischerweise gemäß dem in Figur 4b gezeigten Regelkreis beschreiben. Die Messgrößen zur Abbildung der Sachverhalte Produktionslast, Ressourceneinsatz, Produktion und Erledigung können in unterschiedlichen Perspektiven als IST-Werte 13, Prognosewerte 11 und Soll- bzw. Planwerte 12 gegeben sein. Insbesondere Planungsentscheidungen im Produktionsprozess können auf Prognosen beruhen oder willkürlich getroffen werden. Die Prognose- bzw. Planungsgüte lässt sich über Abweichungen des Prognose/Plan/Soll-Wertes 11, 12 vom IST-Wert 13 (sowohl qualitativ als auch quantitativ) messen und kann Prognose- bzw. Plananpassungen veranlassen.

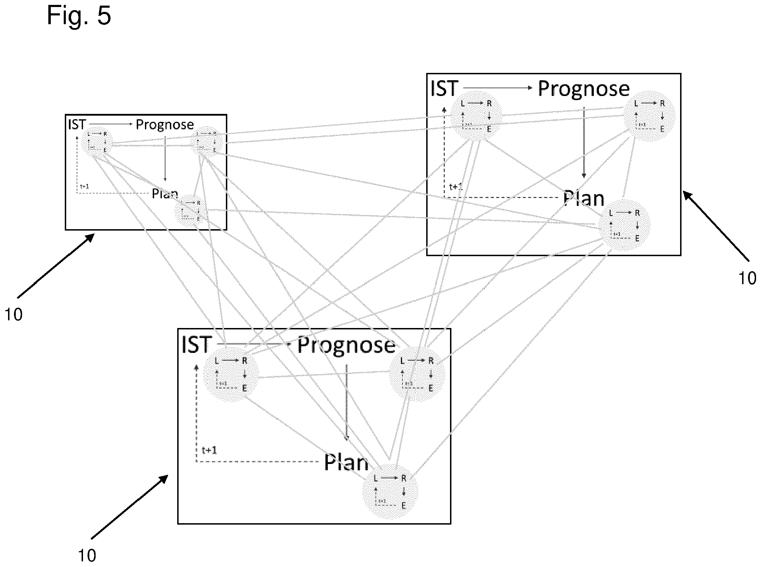

Im Kontext interdependent-verteilter Produktionsprozesse 1 mit dementsprechend verteilten Produktionssteuersystemen 10, wie dies in Figur 5 gezeigt ist, ermöglicht das beschriebene Verfahren eine verlustfreie Integration, Koordination und übergreifende Parameteroptimierungen, sowie parallel in Echtzeit übergreifend abgestimmte strukturelle Anpassungen der abgebildeten Sachverhalte bei beliebigem Zuschnitt, also "Optimierungen höherer Ordnung". Nach Integration lassen sich auch die Schnittstellensystemgrenzen frei wählen, vormals isolierte Teilsysteme können also bis auf atomare Datenebene einfach vernetzt werden, wodurch grundsätzliche Organisationsstrukturunabhängigkeit erreicht wird (z.B. vertikale Integration als freie Verteilung zwischen Zentralisierung und Dezentralisierung). Durch die Echtzeit-konsolidierte Abbildungsmöglichkeit aller Wirkungszusammenhänge im integrierten System werden schnittstellensystemübergreifende Optimierungen bei freier Zielvariablenwahl ermöglicht, was insbesondere eine notwendige Voraussetzung für die Realisation sich intelligent verhaltender Systeme darstellt.

### Nutzenaspekte des Verfahrens

Der Verfahrensnutzen ist grundsätzlich einsatzabhängig, deshalb folgt eine generelle Übersicht zu vorteilhaften Aspekten ohne Anspruch auf Vollständigkeit.

### Allgemeine Nutzenwirkungen:

- Performanceoptimierung
- Risikominimierung
- Kosten-/Ressourcen-/Prozess-/Systemeffizienz
- Reaktions- und Durchlaufzeitenverbesserung
- Erhöhung Informationsgehalt
- Datenqualitätsverbesserung
- Funktions-/Leistungsumfangserweiterung (z.B. Erhöhung von Freiheitsgraden dedizierter Prozessfunktionen)

### Spezielle Nutzenwirkungen:

- übergreifende Standardisierung (lokaler bzw. verteilter) Datenstrukturen ohne wesentliche inhaltliche oder verarbeitungsseitige Beschränkungen
- Übergreifende Integration verteilter ERP-Systeme
- Bidirektional-funktionale Integration von Schnittstellensystemen (z.B. Datenbankanbindung an Tabellenkalkulationen u.ä., mögliche Teilnutzung von schnittstellensystemeigenen Formaten als Systemfrontend)
- Ermöglichung erweiterter übergreifender - auch vollmaschineller - Analysen
- inhaltliche Prozessoptimierung Datenanalytik
- Ersatz lokal-intransparenter Steuer- und Verarbeitungsprozesse durch übergreifend transparentes, revisionssicheres Verfahren
- Komplexitätsreduktion ohne relevante Informationsverluste bei beliebiger Anpassbarkeit (auch ad hoc) und vollständiger Kontrolle
- Flexible, kollisionsfreie Anpassungen in allen relevanten Aspekten (z.B. Modellgenerierung und -änderungen, Überschreibung berechneter Werte, ...)
- Verbesserte Konsistenz durch Förderung von Redundanzfreiheit bzgl. der Variablen (Zusatznutzen: weniger Speicherplatzbedarf) und implizite Daten- sowie Prozessqualitätssicherung
- End-to-End-Prozessintegration; Ermöglichung übergreifender Prozessqualitätssicherung
- Implizite, automatische Inventarisierung der abgebildeten Prozesse (z.B. data lineage analyse)
- Erleichterte Rekonstruktion/Reverse engineering bei beliebigen Einstiegspunkten
- Erweiterte Visualisierungsmöglichkeiten (Verarbeitungsstrukturen, Wertflüsse, ...)
- Prozesskostenreduktion (System- und Inhaltspflege, Analysen, Rekonstruktion, ...)
- Verbesserte Reaktionsfähigkeit, kürzere Durchlaufzeiten
- Verbesserung von Revisionssicherheit und Compliance
- Ermöglichung einer echten vertikalen Steuerungsintegration statt verlustbehafteter, interpretativer Steuerungsprozesse
- Vereinfachte Vorbereitung und Durchführung von Standard-ERP-Migrationen durch implizites, "automatisches" reverse engineering von vormals verteilten IDV-Systemen

## Patentansprüche

1. Verfahren zur Integration und Koordination von Mess- und/oder Steuersystemen mittels eines auf einer funktionalen Datenstruktur beruhenden Systems, wobei die zu integrierenden Mess- und/oder Steuersysteme jeweils Datenwerte zur Datenstruktur generieren bzw. verarbeiten sowie Datenstrukturelemente erzeugen und verändern können mit den Schritten:
a. Generierung einer funktionalen Datenstruktur mit Variablen zur Abbildung der Datenwerte der Mess- und/oder Steuersysteme,
b. inhaltliche Beschreibung der Variablen mittels einer Menge definierender Attribute, wobei wenigstens ein Attribut Variablenreferenzen auf andere Variablen enthalten kann, um Variablennetzwerke abzubilden,
c. Erzeugen eines primären Klons einer Variablen, falls wenigstens eine ihrer definierenden Variablenattributausprägungen durch eines der integrierten Mess- und/oder Steuersysteme geändert wurde,
d. Erzeugen von maschinellen Klonen derjenigen Variablen, die auf abhängigen Variablennetzwerkpfaden der primär geklonten Variablen liegen.

2. Verfahren nach einem der vorstehenden Ansprüche, **dadurch gekennzeichnet, dass** das Referenzieren einer Variablen auf eine Referenzvariable durch funktionale oder assoziative Zuordnungsbeziehungen definiert sein kann.

3. Verfahren nach einem der vorstehenden Ansprüche, **dadurch gekennzeichnet, dass** die Variablenklone eine eindeutige Klonvorgangs-Laufnummer erhalten, die in einem ihrer Attribute gespeichert wird, sowie einen Verweis auf ihre zugehörige ursprüngliche Variable in einem Attribut der Variable speichern.

4. Verfahren nach einem der vorstehenden Ansprüche, **dadurch gekennzeichnet, dass** in einem Attribut des Variablenklon gespeichert wird, ob es sich bei dem erzeugten Variablenklon um einen primären Klon oder einen maschinellen Klon handelt.

5. Verfahren nach einem der vorstehenden Ansprüche, **dadurch gekennzeichnet, dass** den erzeugten Variablenklonen weitergehende Informationen zum Klonprozess über ein oder mehrere weitere Attribute zugeordnet werden, insbesondere Informationen über ein oder mehrere den Klonprozess auslösende Ereignisse und/oder über den Klonprozess auslösende Nutzer und/oder Zeitstempel des Klonprozesses.

6. Verfahren nach einem der vorstehenden Ansprüche, **dadurch gekennzeichnet, dass** die ein oder mehreren Mess- und/oder Steuersysteme über Systemschnittstellen Zugriff auf die funktionale Datenstruktur und ihre Datenwerte haben, wobei zwischen datenwertändernden bzw. datenwertzuweisenden Zugriffen und strukturerzeugenden bzw. strukturändernden Zugriffen unterschieden wird.

7. Verfahren nach Anspruch 6, **dadurch gekennzeichnet, dass** eine Systemschnittstelle eines Mess- und/oder Steuersystems als echte oder unechte Teilmenge bezüglich der Variablengrundgesamtheit der funktionalen Datenstruktur definiert ist.

8. Verfahren nach Anspruch 6 oder 7, **dadurch gekennzeichnet, dass** der Zugriff auf Teilmengen der Datenstruktur und ihrer Datenwerte begrenzt werden kann, beispielsweise durch Vorgabe von Variablen, durch deren Änderung keine von diesen abhängige Variablen angepasst werden, oder nur Datenwerte für Teile der Datenstruktur ermittelt werden sollen.

9. Verfahren nach den vorstehenden Ansprüchen 6 bis 8, **dadurch gekennzeichnet, dass** bei Datenwertänderungen bzw. Datenwertzuweisungen und Datentwertermittlungen von Variablen ein eindeutiger Laufwert zur Speicherung in einem Attribut zum Variablendatenwert zugewiesen wird.

10. Verfahren nach den vorstehenden Ansprüchen, **dadurch gekennzeichnet, dass** Variablen und ihre Datenwerte durch Schnittstellensysteme mit expliziten Löschanforderungen für ein koordiniertes Löschen versehen werden können.

11. Verfahren nach den vorstehenden Ansprüchen, **dadurch gekennzeichnet, dass** Berechtigungen bis auf Einzelvariablenebene und deren Datenwerte wirken können.

12. Verfahren nach einem der vorstehenden Ansprüche, **dadurch gekennzeichnet, dass** Datenstrukturen und -werte historisiert und Protokoll- bzw. Loggingdaten zum technischen Verfahren selbst generiert werden.

13. System nach den vorstehenden Ansprüche mit Mess- und/oder Steuersystemen als Schnittstellensysteme sowie einem Programmspeicher mit darin gespeicherten Steuerbefehlen, bei deren Aufruf die Schritte des Verfahrens nach einem der vorstehenden Ansprüche ausgeführt werden.

14. System nach Anspruch 13, **dadurch gekennzeichnet, dass** die einzelnen Schritte des Verfahrens und/oder dessen Ergebnisse gemäß einem der vorstehenden Ansprüche visualisiert werden.

15. Computerprogramm umfassend Befehle, die bei der Ausführung des Programms durch einen Computer diesen veranlassen, das Verfahren nach einem der vorstehenden Ansprüche auszuführen.
